# EUROPÄISCHE PATENTANMELDUNG

(11) **EP 0 798 909 A2**
(43) Veröffentlichungstag der Anmeldung: **01.10.1997**
(21) Anmeldenummer: 97101202.6
(22) Anmeldetag: 27.01.1997
(51) Int. Cl.: H04M 1/72

(54) **Schnurloses Telefon mit Personenrufsfunktion**

(30) Priorität: 28.03.1996 DE 19612355
(71) Anmelder: Hagenuk Telecom GmbH, 24118 Kiel (DE)
(72) Erfinder: Gennrich, Bernd, Dipl.-Ing., 24145 Kiel (DE); Fahrenkrog, Wolfgang, 24103 Kiel (DE); Roloff, Bernd, Dipl.-Ing., 24767 Fockbek (DE)
(74) Vertreter: Hansmann, Dierk, Dipl.-Ing.

(57) **Zusammenfassung**

Die Vorrichtung dient zur Telekommunikation und weist eine Basisstation und ein schnurlos über ein Hochfrequenzteil mit der Basisstation kommunizierendes Mobilteil auf. Im Bereich des Mobilteils sind ein Display, eine Displayansteuerung, ein Tonruf, ein Mikroprozessor zur Funktionskoordinierung sowie ein Akkumulator zur Energieversorgung angeordnet. Das Mobilteil weist ein zweites Frequenzteil auf, das an den Mikroprozessor sowie den Akkumulator angeschlossen ist. Das zweite Hochfrequenzteil kommuniziert mit einem Paging-Sender, der eine Trägerfrequenz aufweist, die unterschiedlich zu einer Telefonnutzfrequenz ist.

## Beschreibung

Die Erfindung betrifft eine Vorrichtung zur Telekommunikation, die eine Basisstation sowie ein schnurlos über ein Hochfrequenzteil mit der Basisstation kommunizierendes Mobilteil aufweist und bei der im Bereich des Mobilteils ein Display, eine Displayansteuerung, ein Tonruf, ein Mikroprozessor zur Funktionskoordinierung sowie ein Akkumulator zur Energieversorgung angeordnet sind sowie bei der das Mobilteil ein zweites Hochfrequenzteil aufweist, das an den Mikroprozessor sowie den Akkumularor angeschlossen ist.

Derartige Vorrichtungen zur Telekommunikation können als Mobiltelefone ausgebildet sein und werden beispielsweise als "Home-Handy" bezeichnet. Derartige Mobilteile ermöglichen eine schnurlose Kommunikation bis zu einer Entfernung von ca. 300 m von der Basisstation. Größere Entfernungen können auf Grund der vorgegebenen Senderreichweite nicht überbrückt werden. Dieser Nachteil wird besonders dann als sehr störend empfunden, wenn kleine Mobilteile verwendet werden, die ständig mitgeführt werden können. Auch diese Mobilteile können aber nur in einem relativ engen Umgebungsbereich um die eigene Basisstation herum verwendet werden.

Aus der DE 38 39 015 C1 ist bereits eine Vorrichtung zur Telekommunikation bekannt, bei der ein Mobilteil ein erstes Hochfrequenzteil zur Kommunikation mit einer Basisstation und ein zweites Hochfrequenzteil zur Kommunikation mit einem weiteren Sender aufweist. Das Mobilteil ist von einem Mikroprozessor gesteuert und weist die üblichen Bedienelemente auf. Das Mobilteil kann durch diesen Aufbau unabhängig voneinander und unter Einbeziehung der jeweiligen Reichweiten entweder mit der Basisstation kommunizieren oder die Funktion eines Funkrufempfängers ausüben.

In der DE 40 19 009 A1 wird ein multifunktionales Funkgerät beschrieben, das in unterschiedliche Betriebsarten umsteuerbar ist. Als besondere können die Funktionen eines schnurlosen Telefonapparates mit Mobilteil, eines Funkrufempfängers sowie eines Anrufbeantworters aktiviert werden.

Aus der DE 39 42 544 A1 ist ein Nachrichtenübertragungssystem bekannt, mit dem Rufsignale oder Nachrichten zu einem Funkempfänger weitergeleitet werden können. Eine ankommende Nachricht kann gegebenenfalls aufgezeichnet werden und das Rufsignal kann automatisch über einen Funkrufdienst zu einem Funkrufempfänger weitergeleitet werden.

Aufgabe der vorliegenden Erfindung ist es daher, den Benutzungsfreiraum bei der Verwendung von Mobilteilen zu erhöhen und einen verbesserten Benutzungskomfort bereitzustellen.

Diese Aufgabe wird erfindungsgemäß dadurch gelöst, daß daß das zweite Hochfrequenzteil mit einem Paging-Sender kommuniziert, der eine Trägerfrequenz aufweist, die unterschiedlich zur einer Telefonnutzfrequenz ist und daß im Bereich der Basisstation ein Analysator zur Detektion einer unmittelbaren Erreichbarkeit des Mobilteils angeordnet ist und daß die Basisstation eine Anwahlsteuerung zur automatischen Anwahl des zugeordneten Mobilteils über den Paging-Sender aufweist.

Derartige Paging-Sender können einem Benutzer eine Nachricht übermitteln und sind in den derzeit bekannten Ausführungsformen mit einer Reichweite von etwa 25 km versehen. Durch die Kombination des Mobilteils mit einer Möglichkeit zur Nutzung eines Paging-Senders wird es möglich, daß der Benutzer eines Mobilteils auch außerhalb der Reichweite seiner eigenen Basisstation erreichbar ist. Ein Benutzer des Mobilteils kann nach dem Empfangen einer entsprechenden Nachricht entweder von einem anderen Telefon seinen Kommunikationspartner zurückrufen oder sich in den Bereich seiner eigenen Basisstation zurückbegeben, um mit Hilfe seines Mobilteiles die Kommunikation durchzuführen.

Eine typische Ausführung besteht darin, daß der Paging-Sender als City-Rufempfänger ausgebildet ist.

Gemäß einer anderen Ausführungform ist vorgesehen, daß der Paging-Sender als SCALL-Empfänger ausgebildet ist.

Eine Einbeziehung gegenwärtiger Übertragungsparameter erfolgt dadurch, daß der Paging-Sender eine Trägerfrequenz von 466 MHz aufweist.

Zur einfachen gerätetechnischen Realisierung einer Sprachkommunikation mit einem Anrufer wird vorgeschlagen, daß die Basisstation einen Anrufbeantworter aufweist.

Eine einfache Funktionsgestaltung erfolgt dadurch, daß im Bereich der Basisstation ein Analysator zur Detektion einer unmittelbaren Erreichbarkeit des Mobilteils angeordnet ist.

Zur Aktivierung des Paging-Senders lediglich im Bedarfsfall ist es zweckmäßig, daß der Anrufbeantworter bei einer fehlenden direkten Erreichbarkeit des Mobilteils ausgehend von der Basisstation eine Ansage generiert, die einen Anrufer zur Übertragung dessen eigener Rufnummer auffordert.

Ein automatischer Betrieb wird dadurch erreicht, daß die Basisstation eine Anwahlsteuerung zur automatischen Anwahl des zugeordneten Mobilteils über den Paging-Sender aufweist.

Weitere Einzelheiten, Merkmale und Vorteile der Erfindung ergeben sich aus der nachfolgenden Beschreibung eines Ausführungsbeispieles anhand der Zeichnung. Es zeigen:
- Fig. 1: eine Prinzipdarstellung zur Veranschaulichung der Kommunikation,
- Fig. 2: eine Grundschaltung eines schnurlosen Telefons,
- Fig. 3: eine Grundschaltung eines Paging- Empfängers,
- Fig. 4: ein Blockschaltbild zur Veranschaulichung einer Kombination der Schaltung eines schnurlosen Telefons und der Schaltung eines Paging-Empfängers und
- Fig. 5: ein Ablaufdiagramm zur Veranschaulichung eines Steuer- und Auswertungsablaufes.

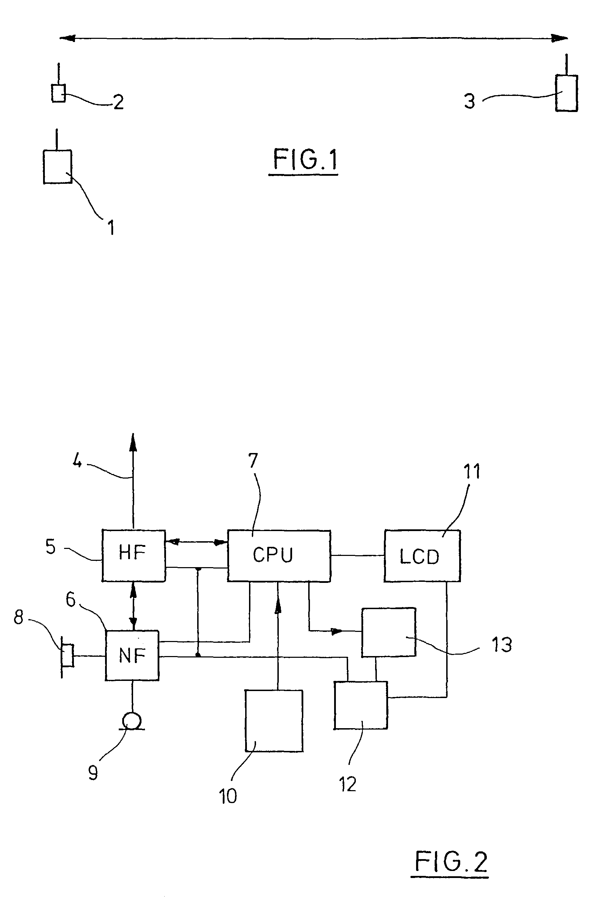

In Figur 1 ist eine Basisstation (1) dargestellt, die über einen Paging-Sender (2) mit einem Mobilteil (3) kommuniziert.

Figur 2 zeigt den Prinzipaufbau eines schnurlosen Telefons. Eine Antenne (4) ist an ein Hochfrequenzteil (5) angeschlossen und das Hochfrequenzteil (5) ist sowohl mit einem Niederfrequenzteil (6) als auch mit einem Mikroprozessor (7) verbunden. An das Niederfrequenzteil (6) sind eine Hörkapsel (8) und ein Mikrofon (9) angeschlossen.

Der Mikroprozessor (7) ist über eine Tastatur (10) bedienbar und eine Anzeige kann mit Hilfe eines Displays (11) erfolgen. Zur Energieversorgung ist ein Akkumulator (12) vorgesehen und eine Anwahlsignali-sierung erfolgt mit Hilfe eines Tonrufes (13).

Der Akkumulator (12) speist sowohl das Niederfrequenzteil (6) als auch das Hochfrequenzteil (5), den Mikroprozessor (7), den Tonruf (13) sowie das Display (11).

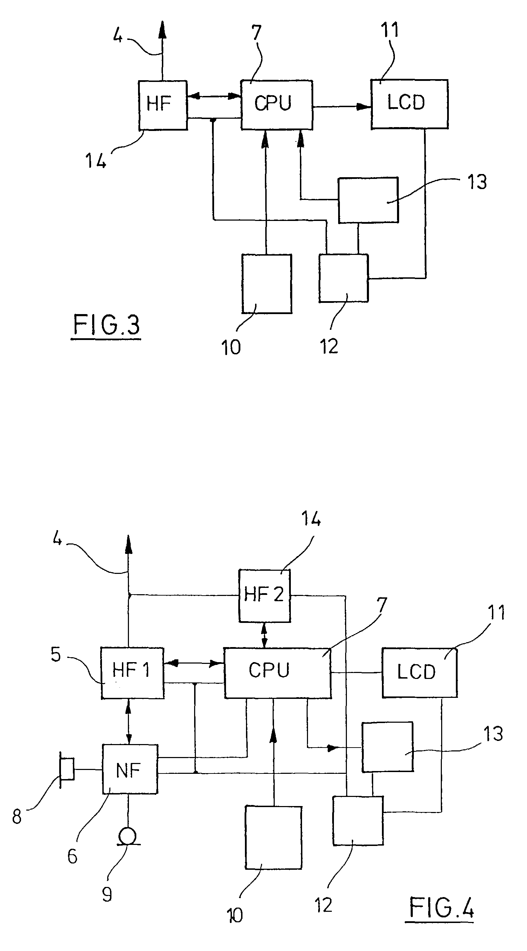

Figur 3 zeigt den Aufbau eines Paging-Empfängers, der im wesentlichen die gleichen Bauteile wie das schnurlose Telefon gemäß Figur 1 aufweist. Es entfallen lediglich das Niederfrequenzteil (6), die Hörkapsel (8) und das Mikrofon (9).

Zur Integration eines Paging-Empfängers in ein schnurloses Telefon ist es deshalb gemäß Figur 4 lediglich erforderlich, ein zweites Hochfrequenzteil (14) mit der Antenne (4) einerseits sowie mit dem Mikroprozessor (7) andererseits zu verbinden. Die Energieversorgung des zweiten Hochfrequenzteils (14) erfolgt ebenfalls über den Akkumulator (12). Zur Funktionsvorgabe erfolgt eine entsprechende Anpassung des Ablaufprogrammes für den Mikroprozessor (7).

Eine Steuerung kann beispielsweise derart realisiert werden, daß empfangene Rufnummern des Paging-Dienstes automatisch in den Kurzwahlspeicher des Telefons übergehen. Durch die Kombination des schnurlosen Telefons und des Paging-Empfängers wird ein Dual-Mode-Gerät aus CT1 oder DECT mit SCALL ausgebildet.

Das zweite Hochfrequenzteil (14) empfängt alle Paging-Sendungen, die von einem zuständigen Paging-Sendemast gesendet werden. Enthält eine Empfangssequenz eine richtige, daß heißt für ein bestimmten Empfänger gültige, Kennung, so gibt das zweite Hochfrequenzteil (14) die entsprechenden Empfangsdaten an den Mikroprozessor (7) weiter. Die Steuerung des Mikroprozessors (7) sorgt für eine Weiterverarbeitung der empfangenen Daten. Über das Display (11), das beispielsweise als LCD-Display ausgebildet ist, wird die entsprechende Nachricht angezeigt und der Empfang der Nachricht wird über den Tonruf (13) signalisiert.

Typischerweise beträgt die Trägerfrequenz der Paging-Kommunikation 466 MHz. Dies bedeutet, daß die Trägerfrequenz etwa die Hälfte des Wertes der CT1-Frequenz bzw. ein viertel der DECT-Frequenz ausmacht. Es liegt somit zur Telefonnutzfrequenz ein ausreichend großer Abstand vor, um eine gemeinsame Antenne (4) zur Anschaltung sowohl des Hochfrequenzteils (5) als auch des zweiten Hochfrequenzteils (14) zu verwenden.

Insbesondere ist daran gedacht, die Basisstation (1) mit einem Anrufbeantworter zu versehen. Bei der typischen maximalen Übertragungsentfernung zwischen der Basisstation (1) und dem Mobilteil (3) von 300 m wird ein Anruf in üblicher Weise signalisiert und angenommen, wenn das Mobilteil (3) weniger als 300 m von der Basisstation (1) entfernt ist. Befindet sich das Mobilteil (3) außerhalb des Übertragungsbereiches zur Basisstation (1), so wird bei einem Anruf automatisch der Anrufbeantworter eingeschaltet. Der Anrufbeantworter fordert dann den Anrufer auf, seine Rufnummer mitzuteilen. Dies kann über MFV erfolgen. Nach einer Beendigung des Gespräches wählt die Basis- station (1) automatisch über ein Kommunikationsnetz die Paging-Rufnummer des eigenen Mobilteils (3) an und überträgt nach entsprechender Anforderung die zuvor empfangene Rufnummer des Anrufers aus dem Datenspeicher des Anrufbeantworters.

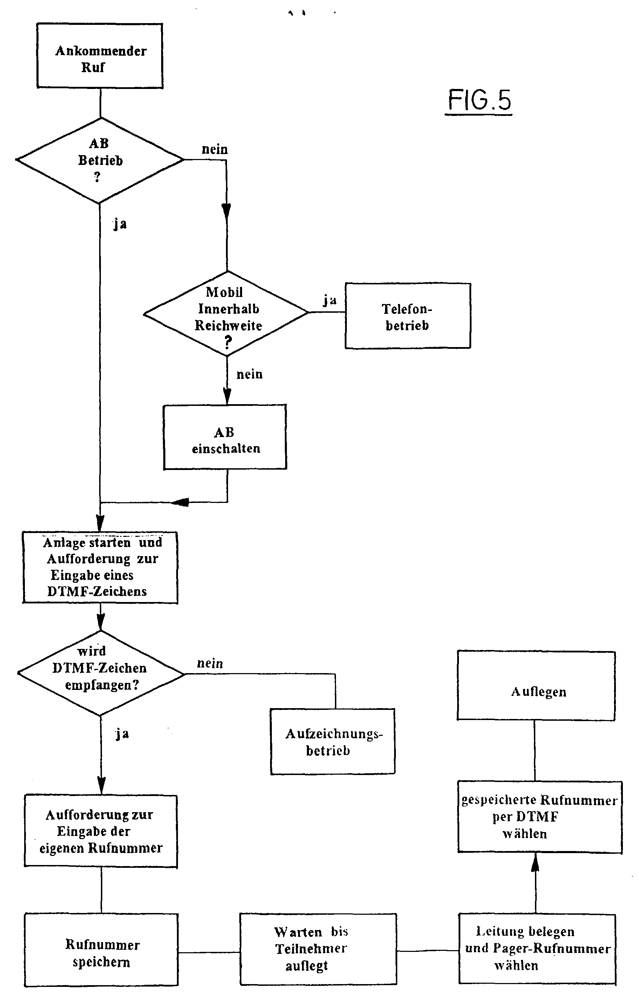

Figur 5 veranschaulicht im Detail den Funktionsablauf. Bei einem im Bereich der Basisstation (1) ankommenden Ruf erfolgt zunächst eine Abfrage, ob ein Betrieb des Anrufbeantworters vorliegt. Ist dies nicht der Fall, so wird überprüft, ob das Mobilteil (3) erreichbar ist. Bei einer entsprechenden Erreichbarkeit wird ein normaler Telefonbetrieb durchgeführt. Ist das Nobilteil (1) nicht erreichbar, wird der Anrufbeantworter eingeschaltet und es werden die Funktionsabläufe abgearbeitet, die bei einem bereits im Betrieb befindlichen Anrufbeantworter unmittelbar angesteuert werden.

Zunächst wird eine entsprechende Ansage übertragen, die auf dem Anrufbeantworter abgespeichert ist. Anschließend erfolgt eine Aufforderung zur Eingabe eines DTMF-Zeichens. Wird festgestellt, daß ein entsprechendes Zeichen nicht empfangen wurde, so wird ein Aufzeichnungsbetrieb durchgeführt. Konnte das entsprechende Zeichen empfangen werden, so erfolgt eine Aufforderung durch eine auf dem Anrufbeantworter abgespeicherte Ansage zur Eingabe der Rufnummer des Anrufers. Nach erfolgter Eingabe wird diese Rufnummer abgespeichert und die Basisstation (1) wartet, bis der Anrufer auflegt. Anschließend erfolgt die automatische Anwahl der Paging-Rufnummer des zugeordneten Mobilteils (3). Die Rufnummer des Anrufers wird dann zum Mobilteil (3) übertragen und die Basisstation (1) beendet abschließend die Verbindung.

Wird ein SCALL-Dienst der Deutschen Telekom verwendet, so ist eine entsprechende Übertragung zu jedem beliebigen Punkt in Deutschland möglich. Voraussetzung ist dazu lediglich, daß ein betreffender Standort mit entsprechender Vorwahl mitgeteilt wurde.

## Patentansprüche

1. Vorrichtung zur Telekommunikation, die eine Basisstation sowie ein schnurlos über ein Hochfrequenzteil mit der Basisstation kommunizierendes Mobilteil aufweist und bei der im Bereich des Mobilteils ein Display, eine Displayansteuerung, ein Tonruf, ein Mikroprozessor zur Funktionskoordinierung sowie ein Akkumulator zur Energieversorgung angeordnet sind sowie bei der das Mobilteil ein zweites Hochfrequenzteil aufweist, das an den Mikroprozessor sowie den Akkumularor angeschlossen ist, dadurch gekennzeichnet, daß das zweite Hochfrequenzteil mit einem Paging-Sender (2) kommuniziert, der eine Trägerfrequenz aufweist, die unterschiedlich zur einer Telefonnutzfrequenz ist und daß im Bereich der Basis-station (1) ein Analysator zur Detektion einer unmittelbaren Erreichbarkeit des Mobilteils (3) angeordnet ist und daß die Basisstation (1) eine Anwahlsteuerung zur automatischen Anwahl des zugeordneten Mobilteils (3) über den Paging-Sender (2) aufweist.

2. Vorrichtung nach Anspruch 1, dadurch gekennzeichnet, daß der Paging-Sender (2) als City- Rufempfänger ausgebildet ist.

3. Vorrichtung nach Anspruch 1, dadurch gekennzeichnet, daß der Paging-Sender (2) als SCALL-Empfänger ausgebildet ist.

4. Vorrichtung nach einem der Ansprüche 1 bis 3, dadurch gekennzeichnet, daß der Paging-Sender (2) eine Trägerfrequenz von 466 MHz aufweist.

5. Vorrichtung nach einem der Ansprüche 1 bis 4, dadurch gekennzeichnet, daß die Basisstation (1) einen Anrufbeantworter aufweist.

6. Vorrichtung nach einem der Ansprüche 1 bis 5, dadurch gekennzeichnet, daß der Anrufbeantworter bei einer fehlenden direkten Erreichbarkeit des Mobilteils (3) ausgehend von der Basisstation (1) eine Ansage generiert, die einen Anrufer zur Übertragung dessen eigener Rufnummer auffordert.
